# EUROPÄISCHE PATENTANMELDUNG

(11) **EP 4 339 016 A1**
(43) Veröffentlichungstag der Anmeldung: **20.03.2024**
(21) Anmeldenummer: 22196014.9
(22) Anmeldetag: 16.09.2022
(51) Int. Cl.: B60P 1/02, B60P 1/64, B62D 53/00, B62D 61/02, B25J 1/00, B66F 1/00

(54) **TEILAUTONOMES HEBE-FRACHTFAHRZEUG**

(71) Anmelder: Otte, Stephan, 23566 Lübeckk (DE)
(72) Erfinder: OTTE, Stephan, 23566 Lübeck (DE)
(74) Vertreter: Jeck, Jonathan

(57) **Zusammenfassung**

Ein Elektrofahrzeug mit Stromspeicher ohne eigenen Führerstand, bestehend aus zwei zueinander beweglichen Ladegutaufnahmen. An den Seiten dieser Behälter befindet sich ein insgesamt vierteiliges Fahrwerk, welches das Anheben und Absenken der Ladegutaufnahmen sowie eine Stoßdämpfung während der Fahrt umsetzt. Dieses Konzept ermöglicht ein Downsizing des Warentransports (z. B. bzgl. der Ladekapazität), eine Teilautomatisierung sowie für größere Strecken eine Teilverlagerung auf alternative Transportwege wie z. B. die Schiene. Das Fahrzeug ist so skaliert, dass es orthogonal zur Fahrtrichtung eines größeren Transportmittels wie z. B. einem Eisenbahnwaggon auffahren kann. Zudem verfügt es über einen integrierten Mechanismus, mit dem es sich im Waggon selbst verankert und somit eigenständig selbst verladen kann. Die Kontaktpunkte dieses Verankerungsmechanismus können auch für eine Stromverbindung zwischen Waggon und Fahrzeug verwendet werden, um die Stromspeicher des Fahrzeugs während seines Transports wieder aufzuladen.

## Beschreibung

Die Erfindung betrifft ein fahrerloses Elektrofahrzeug, vorzugsweise mit Stromspeicher, für den Transport von Waren im Schienen- und Straßenverkehr.

Das Fahrzeug ist für den Warentransport beispielsweise von einer zentralen Lagerstätte aus zu einem Empfänger wie bspw. das Geschäft eines Händlers oder Großkunden ausgelegt. Seine Transportkapazität kann mit der eines kleinen Lastkraftwagens oder Kleintransporters vergleichbar sein.

Die Figuren sind in der Beschreibung mit [0001] bis [0014] gekennzeichnet.
zeigt ein teilautonomes Hebe-Frachtfahrzeug mit herabgesenkten Transportbehältern (1) aus der Vogelperspektive. Die Türen des vorderen Transportbehälters sind geöffnet und zwei Europoolpaletten (4) liegen in diesem. Die linkere der Paletten ragt aus der Transporteinheit heraus.
zeigt das Fahrzeug mit ausgefahrenen Antriebseinheiten (2) aus der Vogelperspektive.

Zeigt das Fahrzeug aus der Parallelperspektive von oben.

Zeigt das Fahrzeug aus der Vogelperspektive, wobei die hintere Transporteinheit zum Betrachter gekippt und das Fahrzeug somit tordiert ist.

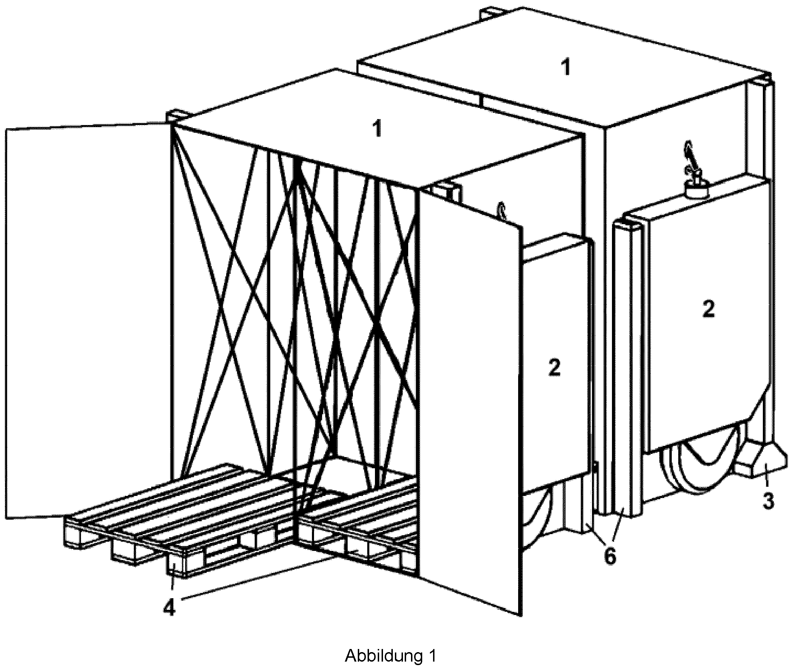

Zeigt das Fahrzeug wie in Abbildung 1, nur ohne Paletten.

Zeigt eine Transporteinheit des Fahrzeugs (2) mit leicht ausgefahrenem Antrieb, so dass die Einheit gekippt ist und ihre Walzen (7) die Einheit auf den Erdboden stützen.

Zeigt eine einzelne Transporteinheit aus der Parallelperspektive von oben.

Zeigt vier Fahrzeuge in orthogonaler Fahrtrichtung verladen auf einen Eisenbahnwaggon aus der Vogelperspektive. Auf Höhe des zweiten Fahrzeugs von rechts befindet sich eine Rampe, über welche das Fahrzeug den Waggon befahren und verlassen kann.

Zeigt drei Fahrzeuge in orthogonaler Fahrtrichtung verladen auf einen Eisenbahnwaggon aus der Parallelperspektive von oben. Die Fahrzeuge sind ungenau zum Waggon und zueinander ausgerichtet. Unterhalb der Fahrzeuge befinden sich zwei weitere freie Plätze für Fahrzeuge. In diesen Plätzen ist die Halterung des Verankerungs-mechanismus (9) im Waggon zu erkennen, sowie das Schienensystem (10) für die Feinausrichtung dieser Verankerung.

Zeigt das Fahrzeug aus der seitlichen Parallelperspektive mit eingezogenen Antriebseinheiten (2) und ausgefahrenen Verankerungshaken (8).

Zeigt eine äußere Führungsschiene (3) einer Transporteinheit aus der Froschperspektive. Im Boden des verbreiterten Fußes ist der Verankerungshaken (8) auf seinem Schienensystem zur Feinausrichtung zu sehen.

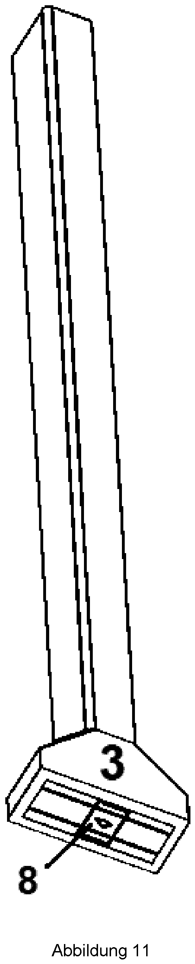

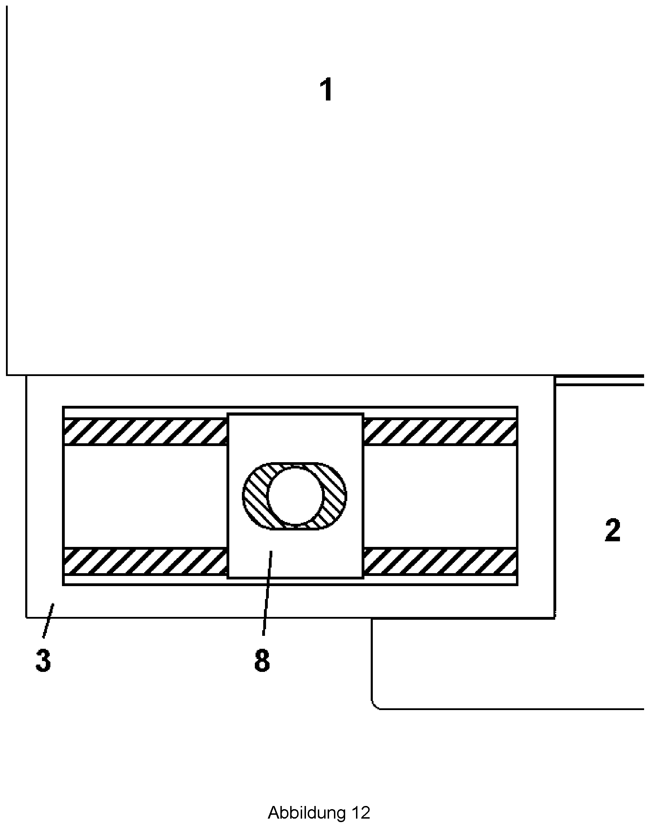

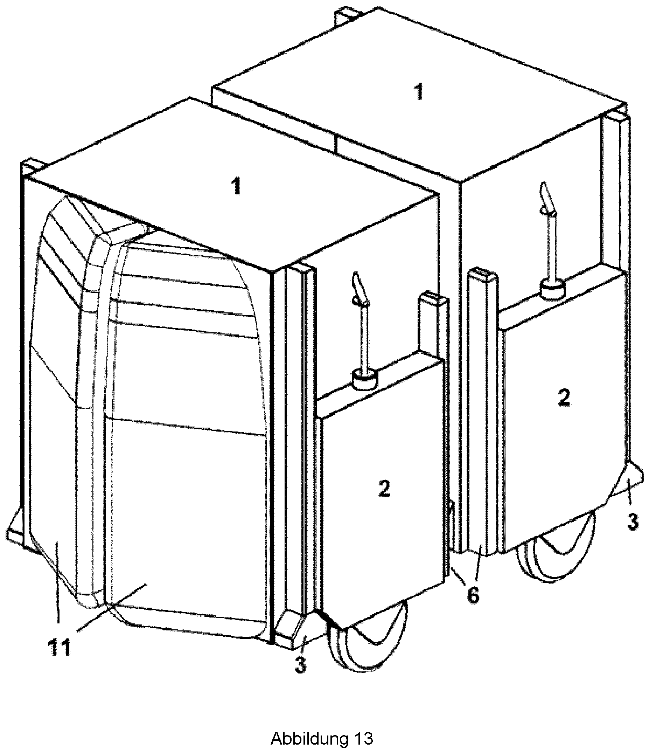

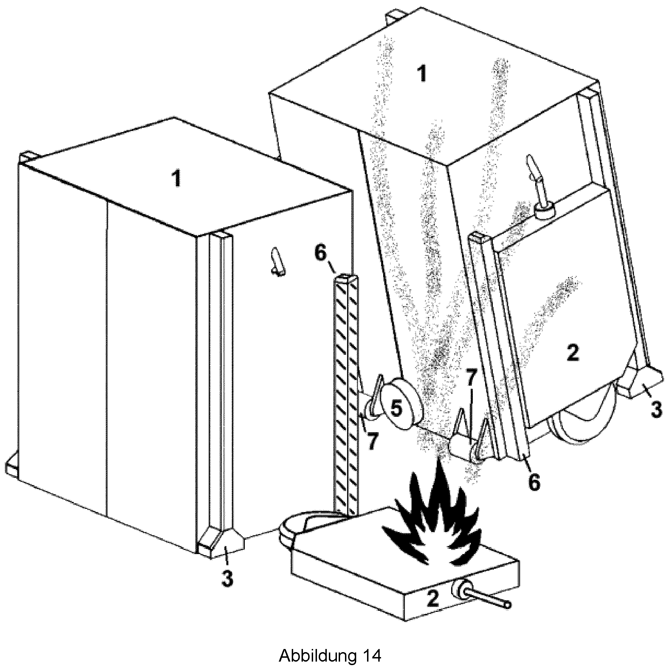

Zeigt eine äußere Führungsschiene (3) mit Verankerungshaken (8) auf seinem Schienensystem (schraffiert) wie in Abbildung 11, jedoch aus der Parallelperspektive von unten und mit der angrenzenden Transporteinheit (1) und Antriebseinheit (2).

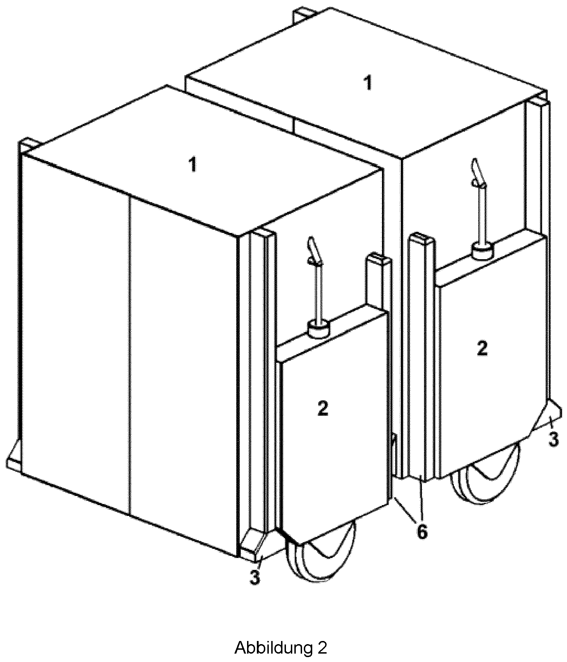

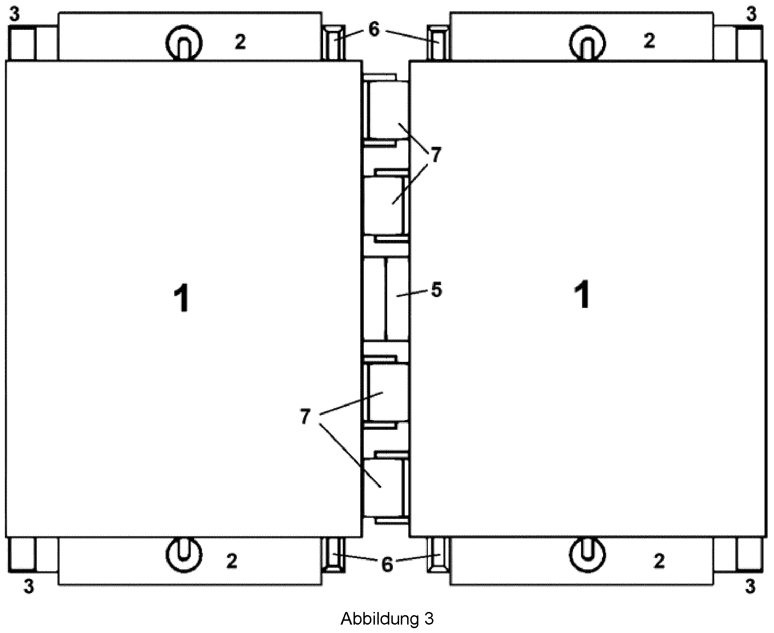

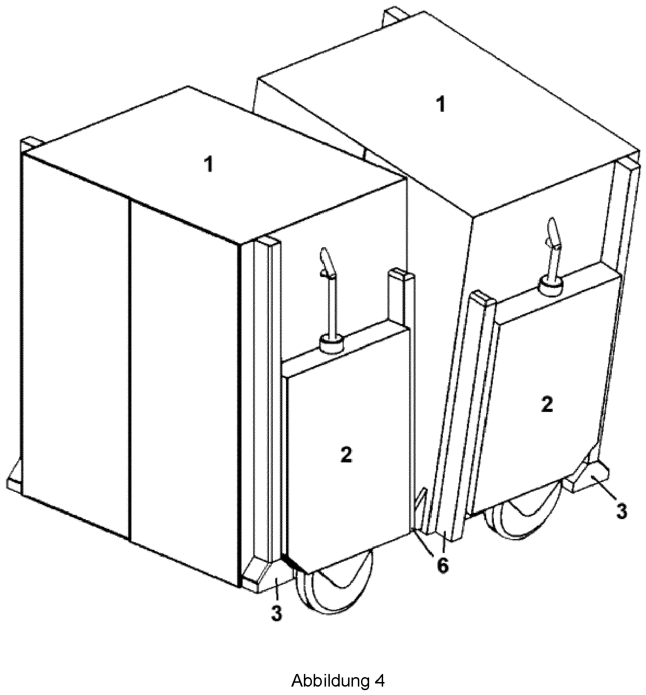

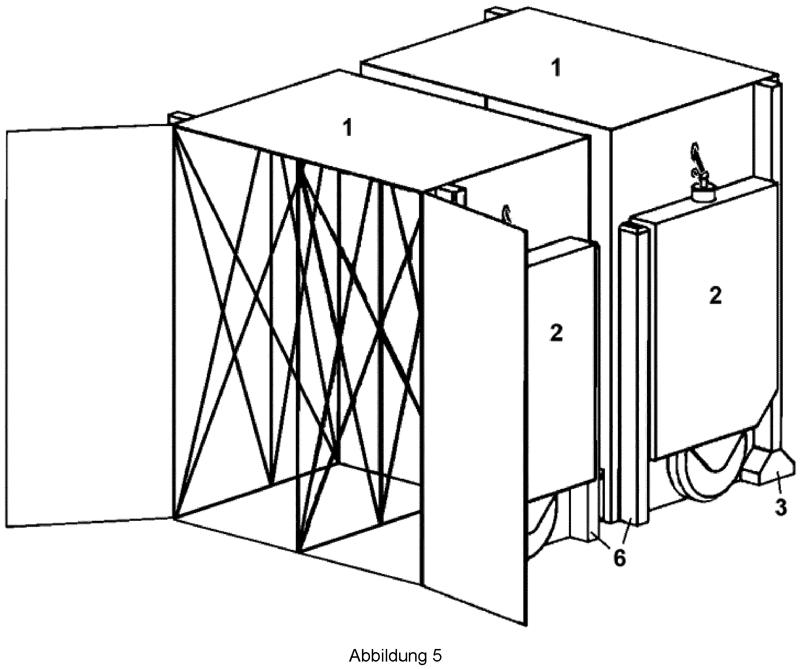

Zeigt das Fahrzeug wie in Abbildung 2, jedoch mit aufgeblasenen Luftkissen (11) zur Reduzierung des Luftwiederstandes.

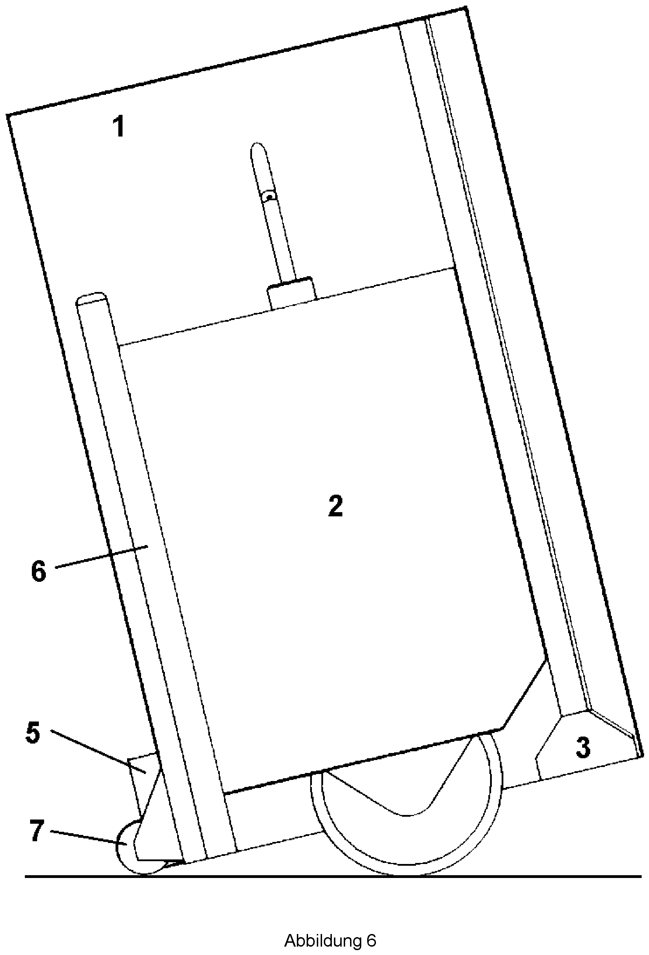

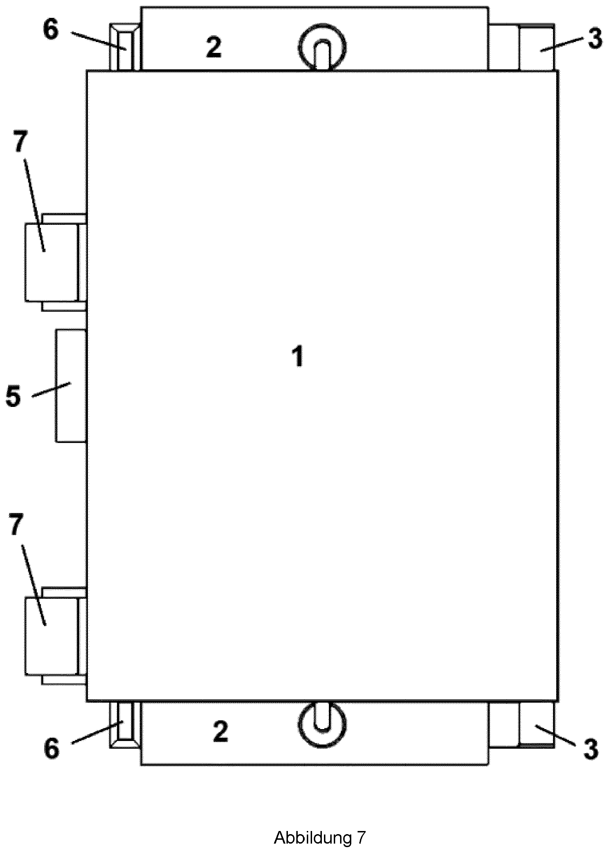

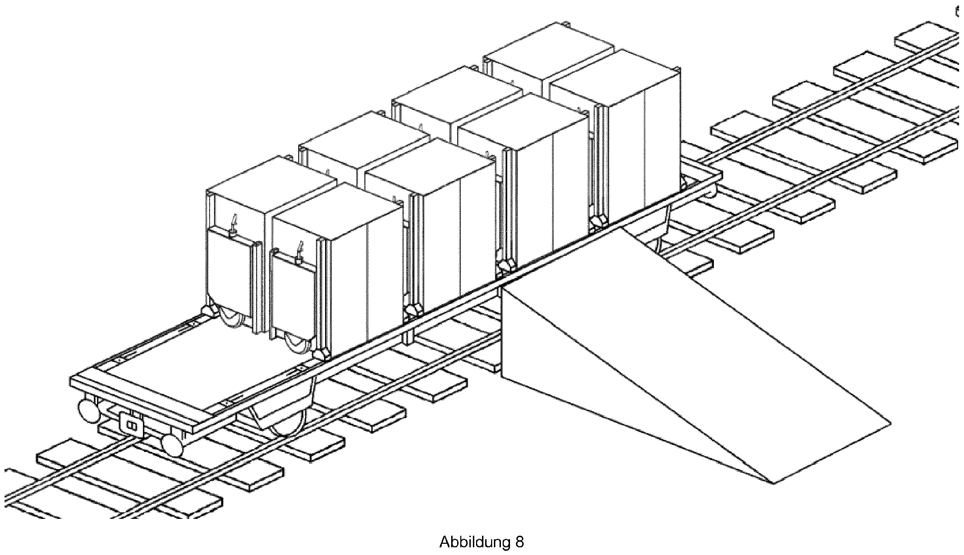

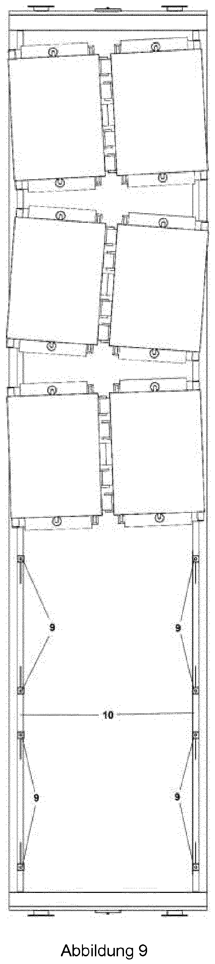

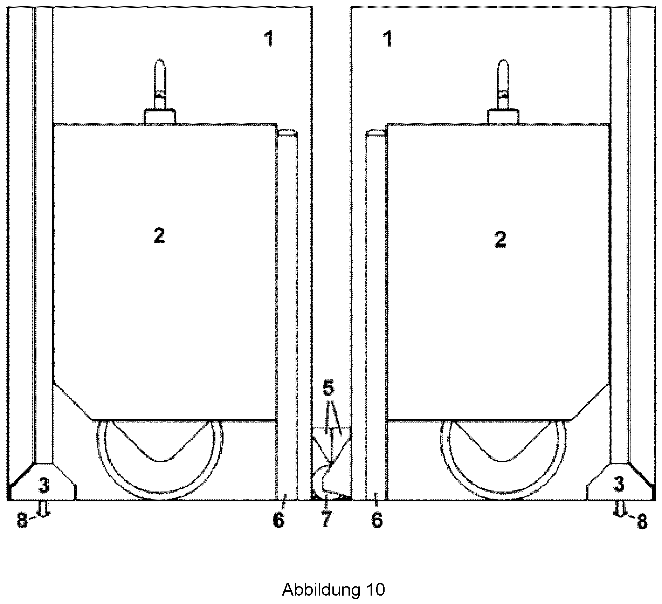

Zeigt ein durch Feuer in einer Antriebseinheit zerstörtes Fahrzeug aus der Vogelperspektive. Die zerstörte linke Transporteinheit (1) steht auf dem Boden. Ihre dem Betrachter zugewandte innere Führungsschiene (6) (schraffiert) ist verbogen und hat das Herauslösen der brennenden Antriebseinheit (2) ermöglicht. Diese befindet sich brennend und auf der Seite liegend neben der Transporteinheit. Die intakte rechte Transporteinheit (1) ist von der zerstörten Transporteinheit abgekoppelt und hat ihre Antriebseinheiten (2) wie in Abbildung 6 leicht ausgefahren, um auf ihren Walzen (7) eigenständig mobil zu sein und sich vom Feuer entfernen zu können.

Das Fahrzeug verfügt vorzugsweise über keinen Führerstand und wird beispielsweise entweder per Telefahren gesteuert oder fährt autonom. Um insbesondere Ersteres zu unterstützen, kann eine flächendeckende Kommunikationsinfrastruktur wie bspw. ein Mobilfunknetz der fünften Generation (5G) mit niedrigen Latenzen zweckdienlich sein.

Das Auslassen eines Führerstandes im Vergleich zu herkömmlichen Transportfahrzeugen und der damit einhergehende Fokus auf die Ladegutaufnahmen beim Design sowie ein platzsparender Aufbau des Fahrgestells (geringe Ausmaße des Fahrgestells) ermöglichen nur wenig über die Ladefläche hinausgehende Ausmaße des Fahrzeugs mit erheblichen Einsparungen beim Platzbedarf des Fahrzeugs. Dies erhöht zugleich die Manövrierfähigkeit in engen Nebenstraßen.

Das Fahrzeug kann sich modular aus zwei identischen Transporteinheiten (1) **[0003]** zusammensetzen, welche über ein zentrales Gelenk (5) aneinandergekoppelt werden können. Das Gelenk ermöglicht eine Torsion der beiden Einheiten zueinander **[0004].** An den äußeren Seiten der Transporteinheiten können jeweils eine, vorzugsweise zwei Antriebseinheiten (2) angebracht sein. Diese Antriebseinheiten verfügen in ihrer Befestigung (3) (6) über einen Freiheitsgrad in der Vertikalen des Fahrzeugs. Die Antriebseinheiten sind somit gegenüber der Transporteinheiten höhenverstellbar, sind also verfahrbar gelagert. Der Verbund aus Koppelung (5), den zwei Transporteinheiten (1) und den vorzugsweise vier Antriebseinheiten (2) in ihren Befestigungen (3) (6) bildet das Fahrgestell des Fahrzeugs. Da die Antriebseinheiten bevorzugt unabhängig voneinander arbeiten, verfügt das Fahrzeug effektiv über mehrere, vorzugsweise vier Antriebsachsen, welche bevorzugt parallel und /oder koaxial zueinander ausgerichtet sind. Eine symmetrische Zusammensetzung des Fahrzeugs kann ein Fahren in beide Richtungen begünstigen.

Eine Transporteinheit kann wie folgt aufgebaut sein: Ein aus beispielsweise Metallstreben bestehender Käfig (1) ist nach außen hin verkleidet und kann die Ladegutaufnahme der Einheit bilden und damit einen quaderförmigen Transportbehälter bereitstellen. Der Boden der Ladefläche ist vorzugsweise so flach ausgestaltet, dass diese ohne Hilfsmittel von außen mit einem Hubwagen befahren werden kann **[0005]**, wenn die Einheit auf den Erdboden abgesenkt ist. Um den Boden der Ladegutaufnahme zu stabilisieren, kann der Käfig in der Mitte durch einen weiteren Satz Metallstreben gestützt sein und welcher den Käfig zweiteilen kann. Die Maße des Käfigs werden vorzugsweise so gewählt, dass in jeder Hälfte je eine Europoolpalette (4) Platz findet **[0001].** Verschlossen wird der Transportbehälter vorzugsweise durch Türen, welche sich nach außen hin öffnen. Die Türen befinden sich damit bevorzugt an der Front und dem Heck des Fahrzeugs und sind somit in allen Konfigurationen bzw. Zuständen (Verladen, Geparkt, etc.) des Fahrzeugs zugänglich. Welche Enden des Fahrzeugs als Front oder Heck zu betrachten sind, ergibt sich aus der aktuellen Fahrtrichtung des Fahrzeugs.

Die (beiden) Antriebseinheit(en) (2) je eines Transportbehälters (1) befinden sich an den Seiten und können vertikal über ein Schienensystem (3) (6) an diesem entlanggeführt werden. Das Schienensystem fixiert dabei bevorzugt lediglich die Antriebs- und Transporteinheiten zueinander in zwei Raumrichtungen. Die Höhe der Antriebseinheiten hingegen wird über einen pneumatischen oder hydropneumatischen Zylinder gesteuert. Der Zylinder kann in die Antriebseinheit integriert sein und der Kolben kann auf der oberen Seite aus ihr herausragen. Das Ende des Kolbens ist bevorzugt seitlich an der Transporteinheit angebracht. Die Zylinder können somit die Transporteinheit auf ihren beiden Antriebseinheiten stützen. Grundsätzlich kann auch eine größere Anzahl von Antriebseinheiten je Transportbehälter vorgesehen sein.

Hervorzuheben ist, dass bei Einsatz von pneumatischen oder hydropneumatischen Zylindern ein kompressibles Medium bevorzugt Verwendung findet. Dies ermöglicht während der Fahrt eine pneumatische Stoßdämpfung durch den Zylinder zwischen der Transporteinheit und der Antriebseinheit.

Die Antriebseinheiten sind im Verhältnis zur Transporteinheit vorzugsweise sehr schmal aufgebaut, um die Gesamtbreite des Fahrzeugs möglichst gering über die Ladefläche hinaus zu erhöhen. Sie erscheinen daher wie große, flache Kästen, die an den Seiten der Transporteinheiten angebracht sind. Die Breite der Antriebseinheit kann sich im Wesentlichen an den Maßen des Rades orientieren, kann also zumindest minimal breiter als das Rad sein, was einer ungünstigen Wechselwirkung zwischen Rad und Schienensystem (Führungsschiene) vorbeugen kann. Das jeweilige Rad kann unterhalb des Gehäuses der Antriebseinheit beispielsweise auf Trägern angebracht sein - vergleichbar mit der Aufhängung bei einem Fahrrad. Das führende Schienensystem zwischen Antriebs- und Transporteinheit ist bevorzugt außen an den Seiten der Transporteinheit angebracht, so dass die Antriebseinheit an ihrer vorderen und der hinteren Seite in die Führungsschienen greift. Die Länge der Antriebseinheit zwischen den sich gegenüberliegenden Führungsschienen entspricht somit dem Abstand der selbigen (3) (6) zueinander auf einer Seite der Transporteinheit. Aus dem oberen Ende der Antriebseinheit kann der Zylinder herausragen, welcher die Transporteinheit anhebt, also gegenüber Antriebseinheit der Höhe nach verlagert. Die Höhe der Antriebseinheit ist so zu wählen, dass das Gehäuse (im Verbund mit der Antriebseinheit auf der gegenüberliegenden Seite der Transporteinheit) bedarfsgerecht genug Platz für den Stromspeicher, die Elektronik, die Hydraulik bzw. Pneumatik der Zylinder und ggf. die Motoren bietet.

Da das Rad unterhalb des Gehäuses den Großteil der Breite einnimmt, sollte der Motor sich oberhalb des Rades befinden, während sein Drehmoment mit z. B. einem Riemen oder einer Kette auf die Achse des Rades übertragen wird. Alternativ kann auch ein Radnabenmotor im Rad selbst eingesetzt werden. Zur Steuerung einer Änderung der Fahrtrichtung des Fahrzeugs werden die Räder der Einheiten mit unterschiedlichen Rotationsgeschwindigkeiten angesteuert. Die Verwendung von Omnirädern kann hierbei die Reibung der Reifen mit dem Untergrund bei Wendemanövern reduzieren und die Wendigkeit erhöhen.

Auf der koppelnden Seite der Transporteinheit können abseits der Koppelung (5) am unteren Ende zwei Walzen (7) in Bodennähe angebracht sein. Wird die Einheit durch leichtes Ausfahren des Antriebs (2) zu dieser Seite hin gekippt, stützen die Walzen sich auf den Boden und ermöglichen so auch die Bewegung einer einzelnen nicht gekoppelten Einheit **[0006].** Die Walzen sind asymmetrisch positioniert, damit sie sich nicht mit denen einer angekoppelten Einheit überschneiden **[0007].**

Die Länge des Fahrzeugs ist so gewählt, dass es orthogonal zur Fahrtrichtung auf ein größeres Transportmittel wie z.B. ein Eisenbahnwaggon verladen werden kann **[0008]:** Zum Beispiel ein Flachwagen (Flachwaggon) ist dann mit in den Boden eingearbeiteten Schlitzen (9) zu versehen, über welchen mittels z. B. Twistlocks die Fracht verankert werden kann. Diese Schlitze können so angeordnet sein, dass bei einem seitlich aufgefahrenen Fahrzeug die äußeren Führungsschienen (3) der Antriebseinheiten (2) mit den Schlitzen deckungsgleich sind **[0009].** Aus diesen Führungsschienen können dann bei eingezogenem Fahrwerk zum Beispiel Haken oder Keile ausgefahren werden **[0010] [0011],** welche mittels Drehung eine Schließposition einnehmen und das Fahrzeug im Waggon verankern. Der Wagon und das Fahrzeug können so eine Einheit oder ein übergeordnetes Transportsystem bilden. Da eine perfekt passende Parkposition für die Verankerung des Fahrzeugs auf dem Waggon nur durch Auffahren schwer umzusetzen ist, können sowohl die Haken bzw. Keile des Fahrzeugs als auch die Schlitze auf jeweiligen Schienensystemen (8) (10) zur Feinausrichtung angebracht werden: Die einzelnen Schlitze können zum Beispiel mittels Aktuatoren entlang der Fahrtrichtung des Waggons ausgerichtet werden (10), während die Haken oder Keile zum Beispiel durch Aktuatoren entlang Fahrtrichtung des Fahrzeugs ausgerichtet werden **[0012].** Da die Fahrtrichtungen von Fahrzeug und Waggon orthogonal zueinander verlaufen, wird durch dieses System eine Feinausrichtung der Koppelung in zwei Richtungen ermöglicht. Die zum Boden gerichteten Enden der Führungsschienen (3) können verbreitert sein, um für diesen Mechanismus den nötigen Platz zu bieten.

Da über den Verankerungsmechanismus beide Transporteinheiten des Fahrzeugs je an zwei Punkten im Waggon (oder ähnlichem Transportmittel) einhaken, kann diese physische Verbindung zusätzlich für (zwei) stromführende Verbindungen zu den Antriebseinheiten des Fahrzeugs benutzt werden. Während das Fahrzeug transportiert wird, kann es so in das Stromnetz des Transportmittels integriert und die Stromspeicher des Fahrzeugs wieder geladen werden.

Das funktionsorientierte Design des Fahrzeugs führt während der Fahrt zu einem hohen Luftwiderstand. Um dem entgegenzuwirken, können außen an den Türen des Fahrzeugs abgerundete aufblasbare Luftkissen (11) angebracht werden. Zum Fahrtantritt werden diese aufgeblasen und nach Abschluss der Fahrt durch entweichen lassen der Luft geleert **[0013],** um wieder Platz zu sparen. Durch die abgerundete Form wird während der Fahrt der Luftwiederstand verringert. Außerdem dienen die Kissen als Aufprallschutz.

Da abgesehen vom Be- und Entladen der Transporteinheiten des Fahrzeugs die zuvor beschriebenen Vorgänge ohne menschlichen Beitrag durchgeführt werden können, ist es möglich den Warentransport mit dem Fahrzeug zu automatisieren.

Für den Fall einer starken Temperaturerhöhung (z.B. am Stromspeicher einer Antriebseinheit oder äußeren Brandes) kann das Fahrzeug unter Verwendung von Metallen mit verschiedenen Wärmeausdehnungskoeffizienten so konstruiert werden, dass eine starke Temperaturerhöhung zu gezielten Verformungen und dem Auslösen von Sollbruchstellen führt **[0014].** So können sich betroffene Teile bzw. Einheiten aus dem Fahrzeug herauslösen und damit die Löscharbeiten erleichtern. Zudem kann sich - sofern das Fahrzeug nicht verladen ist - die nicht betroffene Hälfte des Fahrzeugs bzw. Einheit abkoppeln und sich selbstständig vom Brandherd entfernen. Um ein solches Manöver automatisch in den richtigen Situationen auslösen zu können kann das Fahrzeug mit entsprechenden zusätzlichen Sensoren wie für Wärme ausgestattet werden und das Szenario eines Brandes in der Steuerungssoftware berücksichtigt.

## Patentansprüche

1. Teilautonomes Hebe-Frachtfahrzeug mit den folgenden Merkmalen
a) das Frachtfahrzeug setzt sich aus zwei Transporteinheiten zusammen, an deren Seiten insgesamt vier pneumatisch oder hydropneumatisch ausfahrbare und stoßdämpfende Rad-tragende Antriebseinheiten befestigt ist,
b) die Transporteinheiten sind über ein Gelenk verbunden, dessen Achse parallel zur Fahrtrichtung des Fahrzeugs verläuft und eine Torsion ermöglicht,
c) die Transporteinheiten sind mit 'thermisch Verformbaren metallischen Sollbruchstellen bereitgestellt, welche ausgebildet sind, bei starker Temperaturerhöhung (Brandfall) zu brechen und die Transporteinheiten auseinanderfallen lassen,
d) die Transporteinheiten können im Bedarfsfall die Koppelung zueinander lösen und durch, vorzugsweise partielles Ausfahren der Antriebseinheiten nach unten die einzelne Transporteinheit kippen, so dass seitlich angebrachte walzenförmige Hilfsräder den Boden berühren und so auch die einzelne Transporteinheit mobil ist,
**dadurch gekennzeichnet, dass**
e) eine symmetrische Zusammensetzung des Fahrzeugs ein Fahren in beide Richtungen ermöglicht,
f) die Transporteinheiten zum Be- und Entladen mittels der Antriebseinheiten auf Bodenhöhe abgesenkt werden können,

2. Teilautonomes Hebe-Frachtfahrzeug nach Anspruch 1
**dadurch gekennzeichnet**
**dass** aufblasbare Luftkissen an Front- und Hecktüren des Frachtfahrzeugs die aerodynamischen Eigenschaften des Fahrzeugs verbessern und zusätzlich als Aufprallschutz dienen.

3. Langstrecken Transportsystem mit
einem Frachtwagon und einem Hebe-Frachtfahrzeug nach Anspruch 1 oder 2 wobei, das Fahrzeug über eine Rampe orthogonal zur Fahrtrichtung des Frachtwagons auf dieses auffahren und sich somit selbst verladen kann,
**dadurch gekennzeichnet,**
**dass** eine Position von Verankerungsmechanismen im Fahrzeug und/oder im Frachtwagon durch Aktuatoren anpassbar sind, um Ungenauigkeiten in Folge von Fahrmanövern auszugleichen,
**dass** der Frachtwagon mit einer Ladefunktion für das Frachtfahrzeug bzw. dessen Transporteinheiten durch Verankerung entstehende physische Verbindungen zwischen Frachtfahrzeug und Frachtwagon zur Stromführung bereitgestellt ist und damit zum Laden eines Stromspeichers des Fahrzeugs während seines Transports.
